# EUROPEAN PATENT APPLICATION

(11) **EP 4 819 602 A1**
(43) Date of publication of application: **07.10.2026**
(21) Application number: 23959939.2
(22) Date of filing: 01.12.2023
(51) Int. Cl.: H04N 19/124, H04N 19/132

(54) **ENCODING METHOD, DECODING METHOD, ENCODER, DECODER, AND STORAGE MEDIUM**

(71) Applicant: GUANGDONG OPPO MOBILE TELECOMMUNICATIONS CORP., LTD., Dongguan, Guangdong 523860 (CN)
(72) Inventor: WANG, Fan, Dongguan, Guangdong 523860 (CN)
(74) Representative: RGTH
(86) International application number: PCT/CN2023/135808
(87) International publication number: WO 2025/112031

(57) **Abstract**

The present application provides an encoding method, a decoding method, an encoder, a decoder, and a storage medium. The decoding method comprises: performing inverse transform on a transform coefficient, and determining a first residual block corresponding to the current block, wherein the size of the first residual block is less than the size of the current block; determining a second residual block on the basis of the first residual block, wherein the size of the second residual block is equal to the size of the current block; and on the basis of the second residual block, determining a reconstruction block corresponding to the current block.

## Description

### TECHNICAL FIELD

This application relates to the field of video encoding and decoding technologies, and in particular, to an encoding method, a decoding method, an encoder, a decoder and a storage medium.

### BACKGROUND

A larger size of a current block indicates a larger size of a corresponding residual block. In an encoding and decoding process, a larger size of a residual block increases computational complexity during transform and inverse transform. Therefore, how to reduce computational complexity of a transform and inverse transform process is a problem that needs to be solved.

### SUMMARY

This application provides an encoding method, a decoding method, an encoder, a decoder, and a storage medium. The following describes the aspects involved in this application.

According to a first aspect, a decoding method is provided. The decoding method is applied to a decoder, and the decoding method includes: performing inverse transformation on a transform coefficient to determine a first residual block corresponding to a current block, where a size of the first residual block is less than a size of the current block; determining a second residual block according to the first residual block, where a size of the second residual block is equal to a size of the current block; and determining, according to the second residual block, a reconstruction block corresponding to the current block.

According to a second aspect, an encoding method is provided. The encoding method is applied to an encoder, and the encoding method includes: determining a second residual block corresponding to a current block, where a size of the second residual block is equal to a size of the current block; determining a first residual block according to the second residual block, where a size of the first residual block is less than the size of the current block; and performing transformation on the first residual block.

According to a third aspect, a decoder is provided, including: a first determining module, configured to perform inverse transformation on a transform coefficient to determine a first residual block corresponding to a current block, where a size of the first residual block is less than a size of the current block; a second determining module, configured to determine a second residual block according to the first residual block, where a size of the second residual block is equal to the size of the current block; and a third determining module, configured to determine, according to the second residual block, a reconstruction block corresponding to the current block.

According to a fourth aspect, a decoder is provided, including: a memory, configured to store a computer program; and a processor, configured to execute the method according to the first aspect when running the computer program.

According to a fifth aspect, an encoder is provided, including: a first determining module, configured to determine a second residual block corresponding to a current block, where a size of the second residual block is equal to a size of the current block; a second determining module, configured to determine a first residual block according to the second residual block, where a size of the first residual block is less than the size of the current block; and a transform module, configured to perform transformation on the first residual block.

According to a sixth aspect, an encoder is provided, including: a memory, configured to store a computer program; and a processor, configured to execute the method according to the second aspect when running the computer program.

According to a seventh aspect, a computer readable storage medium is provided, where the computer readable storage medium stores a computer program, and the method according to the first aspect or the second aspect is implemented when the computer program is executed.

According to an eighth aspect, a computer program product is provided, including a computer program, and when the computer program is executed, the method according to the first aspect or the second aspect is implemented.

According to a ninth aspect, a non-volatile computer readable storage medium for storing a bitstream is provided, where the bitstream is generated by using an encoding method of an encoder, or the bitstream is decoded by using a decoding method of a decoder, where the decoding method is the method according to the first aspect, and the encoding method is the method according to the second aspect.

According to a tenth aspect, a bitstream is provided, including a bitstream generated according to the method in the first aspect or a bitstream generated according to the method in the second aspect.

According to embodiments of this application, in an encoding and decoding process, transform or inverse transform is performed on a relatively small block, thereby facilitating reducing computational complexity of a transform or inverse transform process.

### BRIEF DESCRIPTION OF DRAWINGS

FIG. 1 is an example diagram of a structure of a video encoder to which an embodiment of this application is applicable.
FIG. 2 is an example diagram of a structure of a video decoder to which an embodiment of this application is applicable.
FIG. 3 is an example diagram of an intra prediction mode in a related art.
FIG. 4A is a picture without transform processing.
FIG. 4B is a picture obtained after a discrete cosine transform (discrete cosine transform, DCT) is performed on the picture shown in FIG. 4A.
FIG. 5 is a base picture of a DCT2.
FIG. 6A is a schematic diagram of an encoding and decoding procedure in which only one transform is performed.
FIG. 6B is a schematic diagram of an encoding and decoding procedure based on primary transform and secondary transform.
FIG. 7 is an example diagram of input and output data of low-frequency non-separable transform (low frequency non-separable transform, LFNST).
FIG. 8 is an example diagram of a transform core set of LFNST.
FIG. 9 is an example diagram of a base picture of non-separable primary transform (non-separable primary transform, NSPT).
FIG. 10 is a schematic flowchart of a decoding method according to an embodiment of this application.
FIG. 11 is a schematic flowchart of an encoding method according to an embodiment of this application.
FIG. 12 is a schematic diagram of an up-sampling/down-sampling process of a residual block according to an embodiment of this application.
FIG. 13 is a schematic structural diagram of a decoder according to an embodiment of this application.
FIG. 14 is a schematic structural diagram of a decoder according to another embodiment of this application.
FIG. 15 is a schematic structural diagram of an encoder according to an embodiment of this application.
FIG. 16 is a schematic structural diagram of an encoder according to another embodiment of this application.

### DESCRIPTION OF EMBODIMENTS

The following describes the technical solutions in this application with reference to the accompanying drawings.

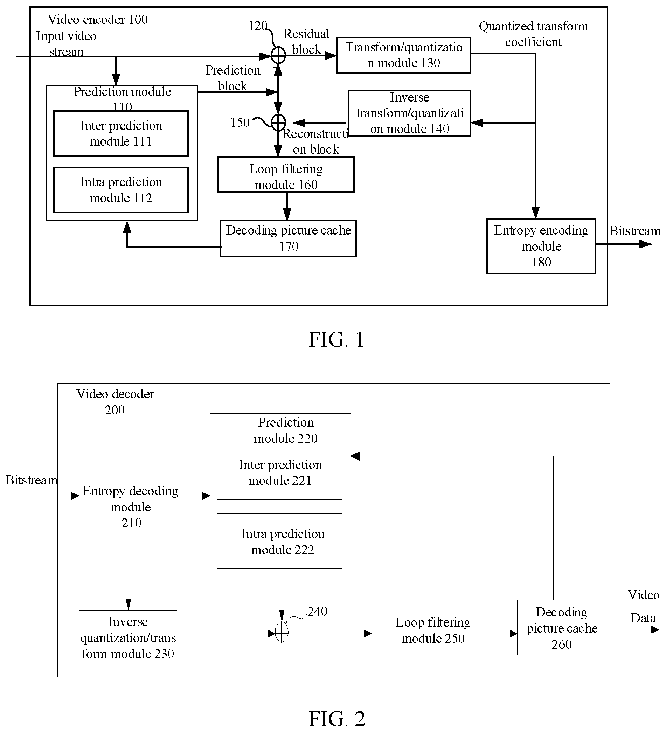

FIG. 1 is a schematic block diagram of a video encoder according to an embodiment of this application.

It should be understood that the video encoder 100 may be configured to perform lossy compression (lossy compression) on a picture, or may be configured to perform lossless compression (lossless compression) on a picture. The lossless compression may be visually lossless compression (visually lossless compression), or may be mathematically lossless compression (mathematically lossless compression).

The video encoder 100 may be applied to picture data in a luminance-chrominance (YCbCr, YUV) format. For example, a YUV ratio may be 4:2:0, 4:2:2, or 4:4:4, Y represents luma (Luma), Cb (U) represents blue chroma, Cr (V) represents red chroma, and U and V represent chroma (Chroma) for describing a color and saturation. For example, in a color format, 4:2:0 represents that every four pixels have four luma components and two chroma components (YYYYCbCr), 4:2:2 represents that every four pixels have four luma components and four chroma components (YYYYCbCrCbCr), and 4:4:4 represents full pixel display (YYYYCbCrCbCrCbCrCbCr).

For example, the video encoder 100 reads video data and partitions each frame of picture in the video data into several coding tree units (coding tree unit, CTU). In some examples, a CTU may be referred to as a "tree block", a "largest coding unit" (Largest Coding unit, LCU for short), or a "coding tree block" (coding tree block, CTB for short). Each CTU may be associated with pixel blocks of a same size in a picture. Each pixel may correspond to one luma (luminance or luma) sample and two chroma (chrominance or chroma) samples. Therefore, each CTU may be associated with one luma sampling block and two chroma sampling blocks. A CTU size is, for example, 128×128, 64×64, 32×32, or the like. One CTU may be further partitioned into several coding units (coding unit, CU) for encoding, and the CU may be a rectangular block or a square block. The CU may correspond to a prediction unit (prediction Unit, PU for short) and a transform unit (transform unit, TU for short).

In some embodiments, as shown in FIG. 1, the video encoder 100 may include a prediction module 110, a residual module 120, a transform/quantization module 130, an inverse transform/quantization module 140, a reconstruction module 150, a loop filtering module 160, a decoded picture cache 170, and an entropy encoding module 180. It should be noted that the video encoder 100 may include more, fewer, or different functional components.

Optionally, in this application, the current block may be referred to as a current coding unit (CU). The prediction block may also be referred to as a prediction picture block or a picture prediction block, and the reconstruction picture block may also be referred to as a reconstruction block or a picture reconstruction block. Due to a need for parallel processing, the picture may be partitioned into slices (slice). The slices in the same picture may be processed in parallel, that is, there is no data dependency between them. The term "frame" is a commonly used expression and may generally be understood as a picture. The frames described herein may also be replaced with pictures, slices, or the like.

In some embodiments, the prediction module 110 includes an inter prediction module 111 and an intra prediction module 112. Since there is a strong correlation between adjacent pixels in a picture of a video, spatial redundancy between adjacent pixels is eliminated by using an intra prediction method in a video encoding and decoding technology. Since there is strong similarity between adjacent pictures in a video, time redundancy between adjacent pictures is eliminated by using an inter prediction method in a video encoding and decoding technology, thereby improving encoding efficiency.

The inter prediction module 111 may be used for inter prediction. The inter prediction may include motion estimation (motion estimation) and motion compensation (motion compensation), and may refer to picture information of different pictures. The inter prediction uses motion information to find a reference block from the reference picture, and generates a prediction block according to the reference block, so as to eliminate time redundancy. Inter prediction uses motion information to find a reference block from the reference picture, and generates a prediction block according to the reference block. The motion information includes a reference picture list in which the reference picture is located, a reference picture index, and a motion vector. The motion vector may be a whole pixel or a sub-pixel. If the motion vector is a sub-pixel, an interpolation filter needs to be used in the reference picture to obtain a required sub-pixel block. Herein, a whole pixel or a sub-pixel block in the reference picture found according to the motion vector is referred to as a reference block. Some technologies directly use the reference block as a prediction block, and some technologies process the reference block to generate the prediction block. Processing the reference block to generate the prediction block may also be understood as: using the reference block as the prediction block and processing the prediction block to generate a new prediction block.

The intra prediction module 112 predicts pixel information in a current coding picture block by referring only to information about a same picture, so as to eliminate spatial redundancy.

There are multiple prediction modes for intra prediction. Take the international digital video coding standard H series as an example. H.264/AVC standard includes eight angle prediction modes and one non-angle prediction mode, and H.265/HEVC extends to 33 angle prediction modes and 2 non-angle prediction modes. (High efficiency video coding, HEVC) uses 35 prediction modes, including a plane mode (Planar), a direct current mode (DC), and 33 angle modes. An intra mode used in versatile video coding (versatile video coding, VVC) includes Planar, DC, and 65 angle modes, a total of 67 prediction modes.

It should be noted that, as a quantity of angular modes increases, intra prediction becomes more precise, and better meets requirements arising from development of high-definition and ultra-high-definition digital videos.

The residual module 120 may generate a residual block of the CU based on a pixel block of the CU and a prediction block of the CU. For example, the residual module 120 may generate a residual block of a CU, so that each sample in the residual block has a value equal to a difference between a sample in a pixel block of the CU and a corresponding sample in a prediction block of the CU.

The transform/quantization module 130 may quantize the transform coefficients. The transform/quantization module 130 may quantize the transform coefficients associated with the CU based on a quantization parameter (QP) value associated with the CU. The video encoder 100 may adjust a degree of quantization applied to the transform coefficients associated with the CU by adjusting the QP value associated with the CU.

The inverse transform/quantization module 140 may perform inverse quantization and inverse transform to the quantized transform coefficients to reconstruct a residual block from the quantized transform coefficients.

The reconstruction module 150 may add a sample of the reconstructed residual block to a corresponding sample of one or more prediction blocks generated by the prediction module 110, to generate a reconstructed picture block associated with a CU. In this way, each sample block of the CU is reconstructed, and the video encoder 100 may reconstruct the pixel block of the CU.

The loop filtering module 160 is configured to process pixels subjected to inverse transform and inverse quantization to compensate for distortion information, so as to provide a better reference for subsequent pixels to be encoded, for example, perform a deblocking filter operation to reduce a block effect of a pixel block associated with a CU.

In some embodiments, the loop filtering module 160 includes a deblocking filter module and a sample adaptive offset/adaptive loop filtering (SAO/ALF) module, where the deblocking filter module is configured to remove the block effect and the SAO/ALF module is configured to remove the ringing effect.

The decoded picture cache 170 may store reconstructed pixel blocks. The inter prediction module 111 may perform inter prediction on a PU of another picture by using a reference picture that includes a reconstructed pixel block. In addition, the intra prediction module 112 may perform intra prediction on other PUs in the same picture as the CU by using the reconstructed pixel block in the decoded picture cache 170.

The entropy encoding module 180 may receive quantized transform coefficients from the transform/quantization module 130. The entropy encoding module 180 may perform one or more entropy encoding operations on the quantized transform coefficients to generate entropy encoded data.

FIG. 2 is a schematic block diagram of a video decoder according to an embodiment of this application.

As shown in FIG. 2, the video decoder 200 includes an entropy decoding module 210, a prediction module 220, an inverse quantization/transform module 230, a reconstruction module 240, a loop filtering module 250, and a decoded picture cache 260. It should be noted that the video decoder 200 may include more, fewer, or different functional components.

The video decoder 200 may receive a bitstream. The entropy decoding module 210 may parse the bitstream to extract syntax elements from the bitstream. As part of parsing the bitstream, the entropy decoding module 210 may parse the entropy encoded syntax elements in the bitstream. The prediction module 220, the inverse quantization/transform module 230, the reconstruction module 240, and the loop filtering module 250 may decode the video data according to the syntax elements extracted from the bitstream, that is, generate decoded video data.

In some embodiments, the prediction module 220 includes an intra prediction module 222 and an inter prediction module 221.

The intra prediction module 222 may perform intra prediction to generate a prediction block of the PU. The intra prediction module 222 may generate a prediction block of a PU based on pixel blocks of spatially adjacent PUs by using an intra prediction mode. The intra prediction module 222 may further determine the intra prediction mode of the PU according to one or more syntax elements parsed from the bitstream.

The inter prediction module 221 may construct a first reference picture list (list 0) and a second reference picture list (list 1) according to the syntax elements parsed from the bitstream. In addition, if the PU uses inter prediction encoding, the entropy decoding module 210 may parse the motion information of the PU. The inter prediction module 221 may determine one or more reference blocks of the PU according to the motion information of the PU. The inter prediction module 221 may generate a prediction block of the PU according to one or more reference blocks of the PU.

The inverse quantization/transform module 230 may inversely quantize (i.e., de-quantize) the transform coefficients associated with the TU. The inverse quantization/transform module 230 may determine the degree of quantization using the QP value associated with the CU of the TU.

After the inverse quantization is performed on the transform coefficients, the inverse quantization/transform module 230 may perform one or more inverse transforms to the transform coefficients subjected to the inverse quantization to generate a residual block associated with the TU.

The reconstruction module 240 reconstructs the pixel block of the CU by using the residual block associated with the TU of the CU and the prediction block of the PU of the CU. For example, the reconstruction module 240 may add a sample of the residual block to a corresponding sample of the prediction block to reconstruct a pixel block of the CU, so as to obtain a reconstructed picture block.

The loop filtering module 250 may perform a deblocking filter operation to reduce a block effect of a pixel block associated with a CU.

The video decoder 200 may store the reconstructed picture of the CU in the decoded picture cache 260. The video decoder 200 may use the reconstructed picture in the decoded picture cache 260 as a reference picture for subsequent prediction, or transmit the reconstructed picture to a display apparatus for presentation.

A basic procedure of video encoding and decoding is as follows. At an encoding end, a picture is partitioned into blocks. For a current block, the prediction module 110 generates a prediction block of the current block by using intra prediction or inter prediction. The residual module 120 may calculate a residual block based on the prediction block and an original block of the current block, that is, a difference between the prediction block and the original block of the current block, and the residual block may also be referred to as residual information. The residual block is subjected to a process such as transformation and quantization of the transform/quantization module 130, to remove information insensitive to a human eye, so as to eliminate visual redundancy. Optionally, a residual block not subjected to transformation and quantization by the transform/quantization module 130 may be referred to as a time domain residual block, and a time domain residual block subjected to transformation and quantization by the transform/quantization module 130 may be referred to as a frequency residual block or a frequency domain residual block. The entropy coding module 180 receives the quantized transform coefficient output by the transform quantization module 130, and may perform entropy encoding on the quantized transform coefficient to output a bitstream. For example, the entropy encoding module 180 may eliminate character redundancy based on a target context model and probability information of binary bitstreams.

At the decoding end, the entropy decoding module 210 may parse a bitstream to obtain prediction information of a current block, a quantization coefficient matrix, and the like. The prediction module 220 generates a prediction block of the current block by performing intra prediction or inter prediction on the current block based on the prediction information. The inverse quantization/transform module 230 performs inverse quantization and inverse transformation on the quantization coefficient matrix obtained from the bitstream to obtain a residual block. The reconstruction module 240 adds the prediction block and the residual block to obtain a reconstruction block. The reconstruction block forms a reconstruction picture, and the loop filtering module 250 performs loop filtering on the reconstruction picture based on the picture or based on the block to obtain a decoded picture. The encoding end needs to perform similar operations as the decoding end to obtain the decoded picture. The decoded picture may also be referred to as a reconstructed picture, and the reconstructed picture may serve as a reference picture for inter prediction, for a subsequent picture.

It should be noted that block partitioning information determined by the encoding end, and mode information or parameter information such as prediction, transform, quantization, entropy encoding, and in-loop filtering, are carried in the bitstream when necessary. The decoding end determines the same block partitioning information and mode information or parameter information such as prediction, transform, quantization, entropy encoding, and in-loop filtering as the encoding end by parsing the bitstream or analyzing existing information, thereby ensuring that the decoded picture obtained at the encoding end is the same as the decoded picture obtained at the decoding end.

The foregoing describes basic processes of the video encoder and the video decoder under a block-based hybrid encoding framework. With development of technologies, some modules or steps of the framework or processes may be optimized. This application is applicable to the basic processes of the video encoder and the video decoder under the block-based hybrid encoding framework, but is not limited to the framework and processes.

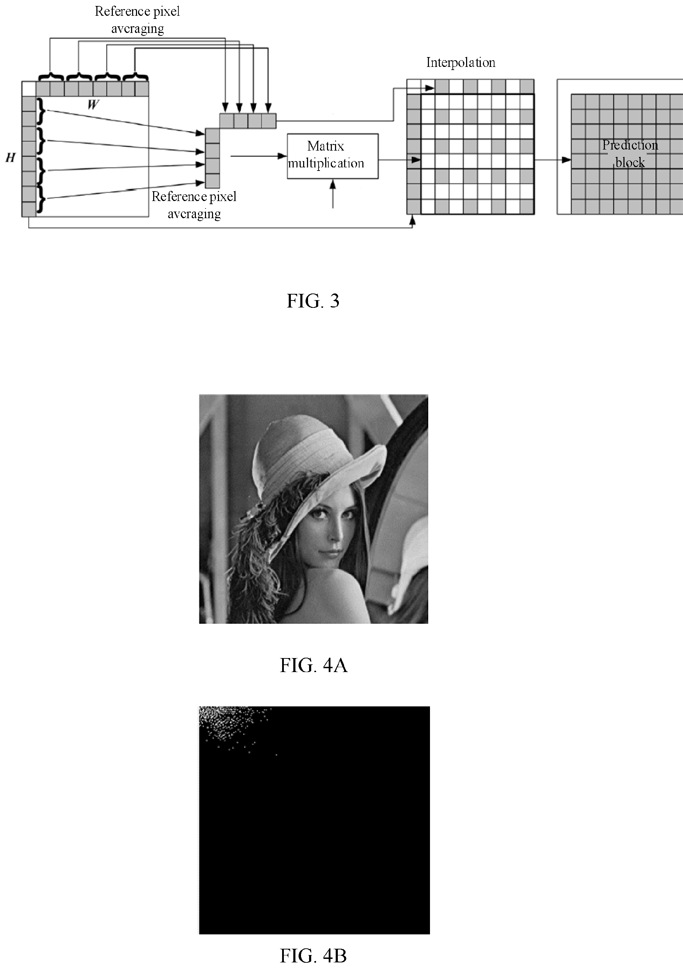

The foregoing describes in detail an encoding and decoding framework provided in an embodiment of this application. As described above, prediction is usually performed first in encoding. The so-called prediction refers to obtaining a prediction block that is the same or similar to a current block based on spatial or temporal correlation performance of a picture. There are many prediction modes, such as intra prediction and inter prediction. Intra prediction may further include multiple prediction modes, such as angle prediction modes. The following describes an intra prediction mode in a related technology, that is, matrix-based intra prediction (matrix-based intra prediction, MIP). The MIP may also be referred to as matrix weighted intra prediction (matrix weighted intra prediction, MIP). As shown in FIG. 3, to predict a block whose width is W and height is H, H reconstructed pixels in a column on the left of the current block and W reconstructed pixels in a row above the current block serve as input for the MIP. The MIP may generate a prediction block according to the following three steps: reference pixel averaging (averaging), matrix vector multiplication (matrix vector multiplication), and interpolation (interpolation). The MIP may be understood as a process of generating a prediction block based on an input pixel (reference pixel) by using the matrix multiplication. The MIP provides multiple matrices, and different MIP prediction modes use different matrices. That is, in the MIP, the same input pixels use different matrices to obtain different results. The process of reference pixel averaging and interpolation is a performance and complexity compromise design. For a larger encoding block, an approximate down-sampling effect can be achieved by averaging reference pixels, so that inputs can be adapted to smaller matrices. Interpolation implements an up-sampling effect. In this way, a matrix of an MIP is unnecessary to be provided for an encoding block of each size, but only matrices with one or more specific sizes are provided. With an increase in a requirement for compression performance and an improvement in a hardware capability, a more complex MIP may occur in a next-generation standard. The MIP is similar to a plane (planar) mode, but obviously the MIP is more complex and more flexible than the planar.

For an encoding block, it is possible that the prediction block is identical to the original block. However, it is difficult to ensure that prediction blocks of all encoding blocks in a video are identical to the original blocks. In particular, for a natural video, or a video photographed by a camera, there is usually a difference between a prediction block and an original block. Changes of irregular motion, distortion, occlusion, and brightness in a video are difficult to be predicted completely. Therefore, according to the hybrid encoding framework, the prediction block is subtracted from the original block of the current block to obtain a residual block. A residual block is generally much simpler than an original block, and therefore, compression efficiency can be significantly improved by prediction. After the residual block is obtained, the encoder generally does not directly encode the residual block, but first performs transformation. Transformation is performed to transform a residual block from a spatial domain to a frequency domain. After the residual block is transformed into the frequency domain, because energy is mostly concentrated in a low frequency region, non-zero coefficients after the transform are mostly concentrated in the upper left corner. Next, these non-zero coefficients can be further compressed using quantization. In addition, because the human eye is insensitive to the high frequency region, the quantization coefficient in the high frequency region may use a larger quantization step.

The following describes a transform process in more detail with reference to FIG. 4A and FIG. 4B. FIG. 4A is an original picture. FIG. 4B is a picture obtained after DCT transformation. It may be learned from FIG. 4B that after a DCT transformation is performed on the original picture, a non-zero coefficient exists in only the upper left corner region. Certainly, FIG. 4A and FIG. 4B are described by using an example in which a DCT transform is performed on an entire picture. In video encoding and decoding, a picture is usually partitioned into blocks, and therefore the transform is also performed based on a block.

In general, transformation is useful in video compression. However, not all encoding blocks need to be transformed. In some cases, the encoding block is transformed to cause a poor compression effect. Thus, in some standards (e.g., VVC), the encoder may choose whether to perform a transform operation on the current block.

Next, a common transform manner in an encoding and decoding process is described.

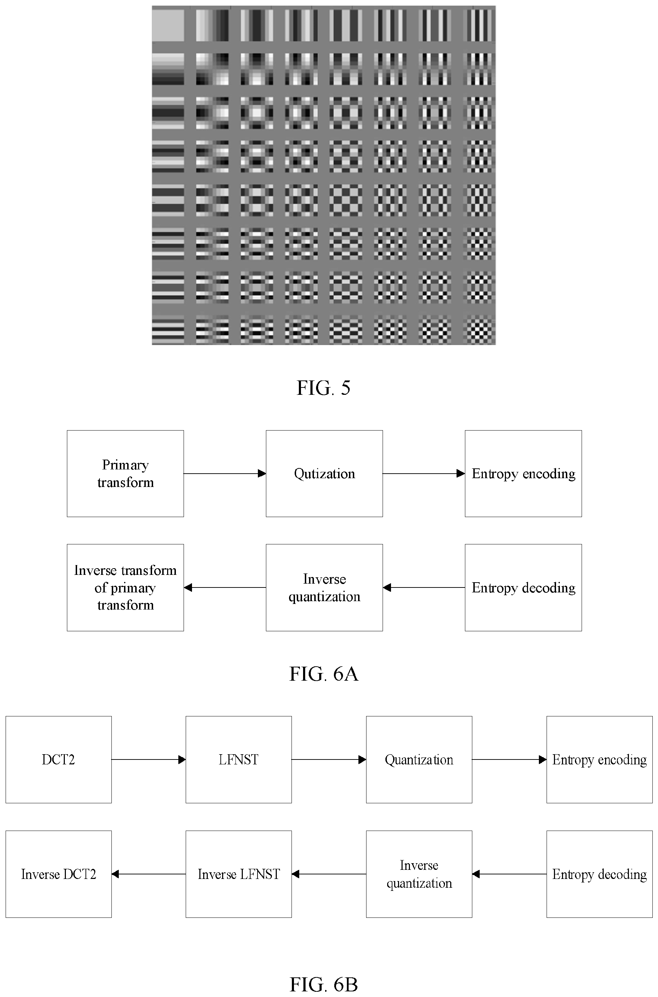

DCT2 is the most commonly used transform in video compression standards. A base picture for DCT2 is shown in FIG. 5. DCT8 and discrete sine transform (DST) 7 may also be used in VVC. Basic formulas of the above transformations are shown in Table 1.

**Table 1**

| Transform manner | Functional base Tᵢ (j), i, j = 0, 1,... , N-1 |
|---|---|
| DCT2 | ${T}_{i} \left(j\right) = {ω}_{0} ⋅ \sqrt{\frac{2}{N}} ⋅ cos \left(\frac{π ⋅ i ⋅ \left(2j+1\right)}{2 N}\right)$ |
| | where, ${ω}_{0} = \left\{\begin{matrix}\sqrt{\frac{2}{N}} & i = 0 \\ 1 & i \neq 0\end{matrix}\right.$ |
| DCT8 | ${T}_{i} \left(j\right) = \sqrt{\frac{4}{2 N + 1}} ⋅ cos \left(\frac{π ⋅ \left(2i+1\right) ⋅ \left(2j+1\right)}{4 N + 2}\right)$ |
| DST7 | ${T}_{i} \left(j\right) = \sqrt{\frac{4}{2 N + 1}} ⋅ sin \left(\frac{π ⋅ \left(2i+1\right) ⋅ \left(j+1\right)}{2 N + 1}\right)$ |

The picture is generally two-dimensional. If two-dimensional transformation is directly performed on the picture, an operation amount and memory overhead of the transformation process are extremely large. Currently, a hardware condition cannot support the two-dimensional transformation. Therefore, in the current standard, one-dimensional transformation is used. That is, the two-dimensional transformation is split into one-dimensional transformation in a horizontal direction and one-dimensional transformation in a vertical direction, and is performed in two steps. For example, a horizontal direction transformation may be performed first, and then a vertical direction transformation is performed. Alternatively, a horizontal direction transformation may be performed after a vertical direction transformation is performed.

In the VVC, multiple transformation manners such as DCT2, DCT8 and DST7 are supported. In each transform manner, multiple transform cores may be included. The transform core may be separately applied to transform in a horizontal direction or a vertical direction. For an encoding block, the encoder may select an appropriate transform core and transmit an index of the transform core to the bitstream. The decoder may determine a transform core of inverse transform according to the index. Different transform cores may be selected for the horizontal direction and vertical direction. For example, transformation in the horizontal direction may be performed by using DCT8, and transformation in the vertical direction may be performed by using DST7. A technology of selecting a suitable transformation manner from the multiple transformation manners is generally referred to as multiple transform selection (multiple transform selection, MTS).

In VVC, a transform core of a primary transform is determined by using a syntax element such as mts_idx. As shown in Table 2, trTypeHor represents a transform core of horizontal transformation, and trTypeVer indicates a transform core of vertical transformation. In Table 2, a meaning of values of trTypeHor and trTypeVer is: 0 indicates a DCT2-type transformation, 1 indicates the DST7-type transformation, and 2 indicates a DCT8-type transformation.

**Table 2**

| **mts_idx** | **0** | **1** | **2** | **3** | **4** |
|---|---|---|---|---|---|
| trTypeHor | 0 | 1 | 2 | 1 | 2 |
| trTypeVer | 0 | 1 | 1 | 2 | 2 |

The effect of transforming a picture texture in the horizontal direction and the vertical direction based on DCT is good. However, transforming the oblique picture texture based on DCT is less effective. Since horizontal and vertical picture textures are common, DCT is useful for improving compression efficiency. As a compression efficiency requirement of the video encoding and decoding technology continuously increases, compression efficiency can be further improved if picture textures in an oblique direction can be more effectively processed.

As a result, LFNST is introduced in VVC to more effectively process oblique picture textures. The following describes the LFNST in detail with reference to FIG. 6A and FIG. 6B. FIG. 6A shows a common encoding and decoding process that does not include LFNST. As shown in FIG. 6A, in an encoding process, only one primary transformation (primary transform) is performed. Correspondingly, in a decoding process, only one inverse transform of the primary transform is performed. FIG. 6B shows an encoding and decoding process after introducing the LFNST. As shown in FIG. 6B, in an encoding process, before a quantization operation is performed, DCT2-based transformation is performed before LFNST-based transformation is performed. In a decoding process, after an inverse quantization operation is performed, inverse transformation based on LFNST is performed first, and then inverse transformation based on DCT2 is performed. It may be learned from the foregoing description that the LFNST is a transform performed on the basis of a primary transform (for example, DCT2), and therefore, the LFNST is generally referred to as secondary transform. The foregoing mentioned primary transform may include transform manners such as DCT2, DCT8, and DST7.

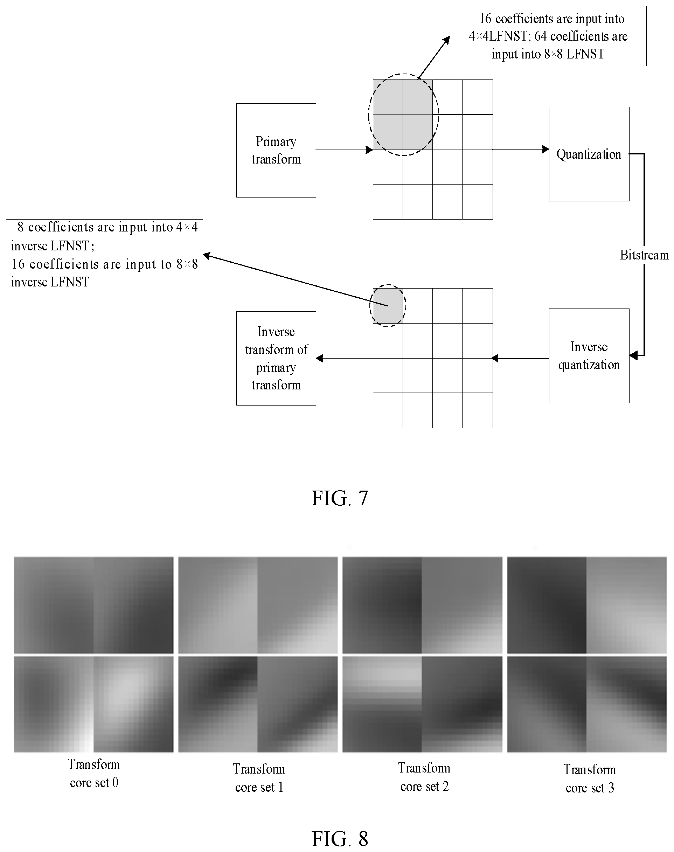

It may be learned from the foregoing description that, at an encoding end, the LFNST is configured to perform secondary transform on a low frequency coefficient subjected to the primary transform. The primary transformation focuses energy on the upper left corner of the picture by de-correlation of the picture. However, the LFNST performs transform on the low-frequency coefficient subjected to the primary transform to remove the correlation. The following describes in detail input and output of the LFNST in an encoding and decoding process with reference to FIG. 7.

Referring to FIG. 7, at an encoding end, if 16 coefficients are input to a 4×4 LFNST, eight coefficients may be output. If 64 coefficients are input to an 8×8 LFNST, 16 coefficients may be output. Correspondingly, at the decoding end, if 8 coefficients are input to an inverse LFNST of 4×4, 16 coefficients may be output. If 16 coefficients are input to an inverse LFNST of 8×8, 64 coefficients may be output.

FIG. 8 shows some basic pictures of LFNST in VVC. As can be seen from FIG. 8, there are some obvious oblique textures in the base pictures corresponding to the transform core sets 1 to 3. That is, the oblique picture texture is better transformed based on the transform core sets 1 to 3. The flat gradient picture texture is better transformed based on the transform core set 0.

The transform core selected by the LFNST may be determined based on an intra prediction mode. Specifically, in angle prediction, reference pixels are padded into the current block at a specified angle as a prediction value, which means that the prediction block has a clear directional texture. A residual block of the current block subjected to angle prediction also show a statistically significant angle characteristic. Therefore, the transform core selected by the LFNST may be bound to the intra prediction mode. That is, after the intra prediction mode is determined, the LFNST may use a set (set) of transform cores corresponding to the intra prediction mode.

The LFNST in the VVC has four sets of transform cores, and each set includes two transform cores. Table 3 provides a correspondence between an intra prediction mode and a transform core set. It should be understood that, in this table, prediction modes 81 to 83 are cross-component prediction modes used when intra prediction is performed on the chrominance block, and these prediction modes are not used when intra prediction is performed on the luminance block.

The transform core of the LFNST may be transposed, so that a transform core set may be used to process more angles. For example, both the prediction modes 13 to 23 and the prediction modes 45 to 55 may correspond to the transform core set 2. However, the prediction modes 13 to 23 are obviously closer to the horizontal prediction mode, and the prediction modes 45 to 55 are obviously closer to the vertical prediction mode.

**Table 3**

| Intra prediction mode | Transform core set index |
|---|---|
| Intra prediction mode < 0 | 1 |
| 0 <= intra prediction mode <= 1 | 0 |
| 2 <= intra prediction mode <= 12 | 1 |
| 13 <= intra prediction mode <= 23 | 2 |
| 24 <= intra prediction mode <= 44 | 3 |
| 45 <= intra prediction mode <= 55 | 2 |
| 56 <= intra prediction mode <= 80 | 1 |
| 81 <= intra prediction mode <= 83 | 0 |

Based on the foregoing description, it may be learned that in VVC, based on a correlation between an intra prediction mode and a transform core of the LFNST, a set of transform cores used by the LFNST may be determined, thereby reducing a quantity of transform cores transmitted in a bitstream. In addition, whether the encoding block uses the LFNST may be determined by using the bitstream and some conditions. If the LFNST is used, it may be further determined whether the encoding block uses the first transform core or the second transform core in a transform core set.

In the related art, the transform core set of the LFNST is further expanded to support more transform core sets. Specifically, in a related technology, LFNST has 35 transform core sets (each transform core set may include three transform cores), and a correspondence between the transform core set and an intra prediction mode is shown in Table 4. Because more transform core sets are introduced, each transform core set is more efficient in processing the corresponding texture.

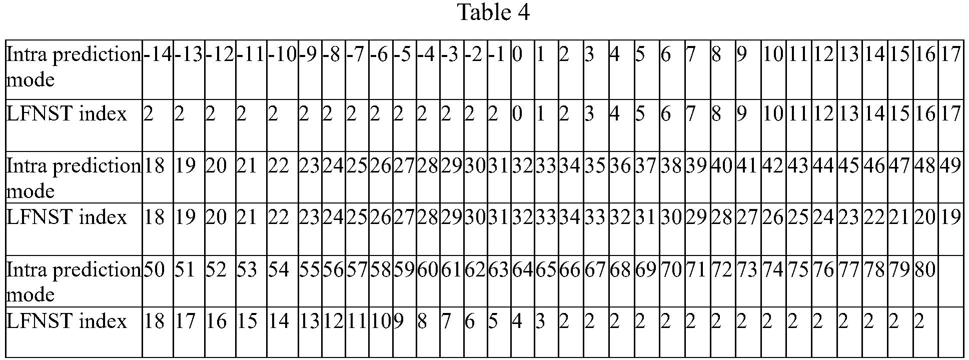

The foregoing describes the primary transformation and the secondary transformation. However, the combination of primary transformation (e.g. DCT2) plus secondary transformation (e.g. LFNST) has good transformation performance, but multiple transformations introduce more complex computation. Therefore, the primary transformation plus secondary transformation may be understood as a compromise solution between performance and complexity. Compared with the primary transform plus secondary transform, the NSPT can process the oblique texture without multiple transforms. The following describes the NSTP provided by a related technology.

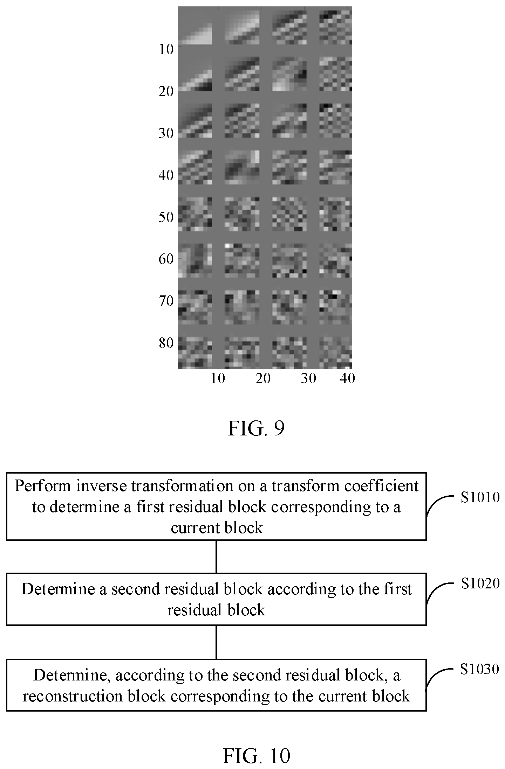

In the related technology, the NSPT and the LFNST match the transform core set in a same manner, that is, match the transform core set according to an intra prediction mode. For a specific matching method, one may refer to the LFNST method. That is, each transform core set includes three transform cores. An 8×8 base picture of the NSPT in the related technology is shown in FIG. 9. FIG. 9 corresponds to an inter angle prediction mode 7. As can be seen from FIG. 9, most of the base pictures of the NSPT have obvious oblique textures, so NSTP is very effective in processing of the oblique texture of the picture.

At the encoding end, the NSPT transforms the residual of the spatial domain into a coefficient of the frequency domain. The input of the transform based on the NSPT is all possible residual values. For example, if there are 32 pixels in a block of 4×8, there are 32 inputs for the NSPT at the encoding end. For another example, if there are 128 pixels in a block of 8×16, there are 128 inputs for the NSPT at the encoding end. An output of the encoding end may be less than the input. In this way, an upper limit of a quantity of coefficients written in a bitstream can be reduced, thereby reducing a calculation amount of the transform process and storage space of a transform core. Certainly, this also causes a distortion (distortion). However, because quantization exists, this can achieve a better cost-effectiveness.

Correspondingly, at the decoding end, the NSPT transforms the coefficient of the frequency domain into a residual of the spatial domain. The output of inverse transform based on the NSPT is a residual value. Table 5 is a transform core information table of the NSPT at a decoding end in a related technology. Referring to Table 5, if there are 32 pixels in a block of 4×8, there are 32 outputs for the NSPT at the decoding end. If there are 128 pixels in a block of 8×16, there are 128 outputs for the NSPT at the decoding end. Input at the decoding end may be less than output.

**Table 5**

| Block size | Number of inputs | Number of outputs | Number of transform cores | Number of transform cores per set |
|---|---|---|---|---|
| 4×4 | 16 | 16 | 35 | 3 |
| 4×8 or 8×4 | 20 | 32 | 35 | 3 |
| 4×16 or 16×4 | 24 | 64 | 35 | 3 |
| 8×8 | 32 | 64 | 35 | 3 |
| 8×16 or 16×8 | 40 | 128 | 35 | 3 |
| 4×32 or 32×4 | 20 | 128 | 35 | 3 |
| 8×32 or 32×8 | 24 | 256 | 35 | 3 |

It can be learned from Table 5 that a quantity of transform core sets and a quantity of transform cores in each set corresponding to NSPT are the same as those of LFNST. Certainly, this configuration may be changed in a future design, and is not specifically limited in embodiments of this application. A quantity of inputs at the decoding end is determined by a specific transform core design. This may also be changed in a future design, and is not specifically limited in embodiments of this application. For example, for a block of 4×8, as shown in Table 5, 20 inputs are configured currently, and 16 inputs may be designed in the future. A quantity of outputs is determined by the size of the block. Specifically, the NSPT inverse transformation process at the decoding end is a matrix multiplication process.

The transform core is a matrix (number of inputs × number of outputs). Therefore, a larger value of (number of inputs × number of outputs) indicates a larger storage space and a larger calculation amount. In view of computational complexity, in the related art, NSPT is only applied to some small-sized current blocks, while large-sized current blocks still use DCT2+LFNST. The small size mentioned herein include, for example, 4×4, 4×8, 8×4, 8×8, 4×16, 16×4, 8×16, 16×8, 4×32, 32×4, 8×32, and 32×8. The following describes the application of NSPT in the encoding and decoding process.

In an encoding process, a residual block is first generated by the encoder. The residual block may be obtained by subtracting the prediction value from the original value of the current block.

The residual block is then transformed. If the size of the current block meets the application condition of the NSPT, the current block may use the NSPT. Otherwise, the current block may use a combination of primary transform plus secondary transform (e.g., LFNST). There may be multiple choices for the encoder to transform the residual block. For example, only primary transform (e.g., DCT2, DST7, DCT8) may be used. Alternatively, NSPT or a combination of primary transform plus secondary transform (for example, LFNST) may be used according to a size of the current block. For example, in the related art, blocks with sizes of 4×4, 4×8, 8×4, 8×8, 4×16, 16×4, 8×16, 16×8, 4×32, 32×4, 8×32, and 32×8 may use NSPT, while blocks with other sizes may use DCT2+LFNST. Certainly, the current block may skip a transformation procedure, that is, no transformation is performed. The encoder may select an appropriate transform mode for transformation.

Finally, the coefficients obtained by the transformation are quantized, and subjected to entropy encoding, and the like.

In a decoding process, a coefficient is first obtained by means of entropy decoding and inverse quantization by a decoder.

Then, inverse transform is performed on the coefficient to obtain a residual block. The decoder may determine the transform mode according to a bitstream indication and known information. For example, the selectable transform modes may include DCT2, DST7, DCT8, DCT2+LFNST, NSPT, and the like. The decoder may distinguish NSPT or a combination of primary transform plus secondary transform (e.g., LFNST) based on a block size. For example, in a related technology, blocks with sizes of 4×4, 4×8, 8×4, 8×8, 4×16, 16×4, 8×16, 16×8, 4×32, 32×4, 8×32, and 32×8 may use NSPT, and blocks with other sizes may use DCT2+LFNST.

Finally, the residual block and the prediction block are added to obtain a reconstruction block.

It may be learned from the foregoing description that a larger size of a current block results in a larger size of a corresponding residual block. In an encoding and decoding process, a larger size of a residual block increases computational complexity during transform and inverse transform. For this reason, many transformation manners with good transformation performance are only applied to a current block with a relatively small size. As mentioned above, NSPT can theoretically provide higher compression efficiency than primary transform (DCT2) + secondary transform (LFNST). However, in consideration of the complexity of applying the NSPT to the large block being relatively high, the related technology applies the NSPT to only the small block, but still applies the DCT2+LFNST to the large block.

For the foregoing problem, an embodiment of this application provides an encoding method. The method includes: determining a second residual block corresponding to a current block, where a size of the second residual block is equal to a size of the current block; determining a first residual block according to the second residual block, where a size of the first residual block is less than a size of the current block; and performing transformation on the first residual block.

In addition, an embodiment of this application further provides a decoding method. The method includes: performing inverse transformation on a transform coefficient to determine a first residual block corresponding to a current block, where a size of the first residual block is less than a size of the current block; determining a second residual block according to the first residual block, where a size of the second residual block is equal to a size of the current block; and determining, according to the second residual block, a reconstruction block corresponding to the current block.

In an encoding and decoding process according to embodiments of this application, a relatively small block is transformed or inversely transformed, thereby reducing computational complexity of a transform or inverse transform process.

The following describes in detail the decoding method in embodiments of this application with reference to FIG. 10.

FIG. 10 is a schematic flowchart of a decoding method according to an embodiment of this application. The method of FIG. 10 may be applied to a decoder.

Referring to FIG. 10, in step S1010, inverse transform is performed on the transform coefficient to determine a first residual block corresponding to a current block. For example, the bitstream may be first parsed to determine a transform coefficient. Then, inverse transform may be performed on the transform coefficient to determine the first residual block.

The current block may refer to a current block to be decoded. In some implementations, the current block is a luminance block. In other implementations, the current block may also be a chrominance block.

A size of the first residual block is less than a size of the current block. In some implementations, the size of the first residual block may be associated with the size of the current block. Alternatively, the size of the first residual block may be determined based on the size of the current block. For example, the size of the first residual block may be proportional to the size of the current block. Assuming that a ratio of the width to the height of the first residual block is a first ratio, and that a ratio of the width to the height of the current block is a second ratio, the first ratio may be equal to the second ratio.

As an example, if a size of a current block is 16 × 16, a size of a first residual block is 8×8; if the size of the current block is 32×32, the size of the first residual block is 8×8; if the size of the current block is 64×64, the size of the first residual block is 8×8; if a size of the current block is 8×32, a size of the first residual block is 4×16; if a size of the current block is 32×8, a size of the first residual block is 16×4; if a size of the current block is 8×64, a size of the first residual block is 4×32; if a size of the current block is 64×8, a size of the first residual block is 32×4; if a size of the current block is 32×64, a size of the first residual block is 8×16; or if the size of the current block is 64×32, the size of the first residual block is 16×8.

Referring to FIG. 10 again, in step S1020, a second residual block is determined according to the first residual block. A size of the second residual block is equal to a size of the current block. Alternatively, a size of the second residual block is greater than a size of the first residual block. For example, the second residual block may be determined by performing up-sampling on the first residual block. There may be multiple manners for performing up-sampling on the first residual block. For example, for the first residual block, up-sampling is first performed in a horizontal direction, and then up-sampling is performed in a vertical direction. For another example, for the first residual block, up-sampling is first performed in a vertical direction, and then up-sampling is performed in a horizontal direction. Performing up-sampling in a one-dimensional direction can reduce computational complexity. Certainly, in some implementations, two-dimensional up-sampling may be performed on the first residual block, thereby improving sampling accuracy.

There may be multiple manners for performing up-sampling. For example, the first residual block may be up-sampled based on linear interpolation. For another example, the first residual block may be up-sampled based on interpolation filtering.

In step S1030, the reconstruction block corresponding to the current block is determined according to the second residual block. For example, the current block may be first predicted to determine a prediction block corresponding to the current block. Then, the reconstruction block may be determined according to the second residual block and the prediction block. A manner of determining the reconstruction block according to the second residual block and the prediction block may include, for example, determining a sum of pixels of the second residual block and the prediction block as the reconstruction block.

In the decoding method provided in embodiments of this application, after an inverse transform operation is performed, a residual block of a relatively small size (relative to a current block) is obtained. That is, the inverse transform operation is performed on a small size block, thereby reducing computational complexity of the inverse transform process.

A type of the inverse transform operation performed in step S1010 is not specifically limited in embodiments of this application. In some implementations, embodiments of this application may be applied to a scenario in which a positive correlation between complexity of an inverse transform operation and a size of a block is obvious. For example, as mentioned above, the NSPT solution is currently applied to only small-sized blocks. This is because a larger size of a block results in higher computational complexity of the NSPT. Therefore, embodiments of this application may be applied to a NSPT-based encoding and decoding scenario, thereby reducing computational complexity of a transform/inverse transform operation.

Embodiments of this application may be applied to a current block of any size. In some implementations, if the size of the current block belongs to a specific size or a specific size set, the decoding method shown in FIG. 10 is used. If the size of the current block does not belong to a specific size or a specific size set, a residual block whose size is the same as that of the current block may be directly determined by inverse transform. For example, if the current block is a small block, a residual block that has a same size as the small block may be obtained by performing inverse transform on the transform coefficient, and a reconstruction block corresponding to the current block is determined based on the residual block. If the current block is a large block, the first residual block smaller than the size of the large block may be determined by performing inverse transform on the transform coefficient. Then, a second residual block with a same size as the large block is determined based on the first residual block, and a reconstruction block corresponding to the current block is determined according to the second residual block. The following provides two possible implementations.

### Implementation 1:

If a size of the current block belongs to a first size set, inverse transform may be performed on the transform coefficient based on NSPT to determine the first residual block (a size is less than the current block). Then, the second residual block may be determined according to the first residual block, and the reconstruction block corresponding to the current block is determined according to the second residual block. For a manner of determining the second residual block and the reconstruction block, one may refer to the description in FIG. 10. Details are not described herein again. The first size set mentioned herein may include, for example, at least one of the following sizes: 32×32, 64×64, 8×32, 32×8, 8×64, 64×8, 32×64, or 64×32.

If the size of the current block does not belong to the first size set, a third residual block (the size is equal to the current block) may be directly determined by inverse transform based on NSPT. Then, the reconstruction block corresponding to the current block may be determined according to the third residual block. For example, the reconstruction block may be determined according to the third residual block and the prediction block. For example, if a size of a current block is one of the following sizes: 4×4, 4×8, 8×4, 8×8, 4×16, 16×4, 8×16, 16×8, 4×32, or 32×4, a third residual block may be directly determined based on NSPT by inverse transform.

In the foregoing, it may be determined, based on a preset threshold, whether the current block belongs to the first size set. For example, if the size of the current block is greater than or equal to the first threshold, the size of the current block belongs to the first size set.

It can be learned from the foregoing description that, in implementation 1, inverse transform is performed based on NSPT regardless of whether a size of a current block belongs to the first size set. In this way, advantages of high compression efficiency of NSPT can be fully utilized, and overall decoding performance is improved.

### Implementation 2:

If a size of the current block belongs to the first size set, inverse transform may be performed on the transform coefficient based on NSPT to determine the first residual block (a size is less than the current block). Then, the second residual block may be determined according to the first residual block, and the reconstruction block corresponding to the current block is determined according to the second residual block. For a manner of determining the second residual block and the reconstruction block, one may refer to the description in FIG. 10. Details are not described herein again. The first size set mentioned herein may include a larger size. For example, the first size set may include at least one of the following sizes: 32×32, 64×64, 8×32, 32×8, 8×64, 64×8, 32×64, or 64×32.

If the size of the current block belongs to the second size set, the third residual block (the size is equal to the current block) may be directly determined based on the NSPT by inverse transform. Then, the reconstruction block corresponding to the current block may be determined according to the third residual block. For example, the reconstruction block may be determined according to the third residual block and the prediction block. The second size set mentioned herein may include a relatively small size. For example, the second size set may include at least one of the following sizes: 4×4, 4×8, 8×4, 8×8, 4×16, 16×4, 8×16, 16×8, 4×32, or 32×4.

If a size of the current block belongs to the third size set, inverse transform may be performed by using a manner of primary transform or a combination of primary transform and secondary transformation to determine a fourth residual block (a size equal to the current block). Then, the reconstruction block corresponding to the current block may be determined according to the fourth residual block. For example, the reconstruction block may be determined according to the fourth residual block and the prediction block. The third size set mentioned herein may include, for example, sizes other than sizes in the first size set and the second size set. For example, the third size set may include 128×64.

In the foregoing, it may be determined, based on a preset threshold, whether the current block belongs to the first size set. For example, if the size of the current block is greater than or equal to the first threshold, the size of the current block belongs to the first size set.

Certainly, it may also be determined, based on a preset threshold, whether the current block belongs to the second size set or the third size set. For example, if the size of the current block is less than or equal to the second threshold, the size of the current block belongs to the second size set.

It can be learned from the foregoing description that the implementation 2 provides more inverse transform manners, so that the inverse transform manner can be flexibly selected according to an actual situation.

As mentioned above, the second residual block may be determined by performing up-sampling on the first residual block. The following provides specific examples for the foregoing up-sampling manner.

For example, the up-sampling is based on linear interpolation. If one-dimensional up-sampling is performed on the first residual block, assuming up-sampling of 1: 2, a value of a newly interpolated point may be an average value of values of two adjacent points. Assuming an up-sampling of 1: 4, a value of a new interpolated point may be a weighted average value of values of two adjacent original points, and a weight and a distance are inversely proportional, that is, weights are 3: 1, 2: 2, and 1: 3 respectively.

In an example in which horizontal up-sampling is performed on the first residual block, it is assumed that a width before up-sampling is widthDwn, a width after up-sampling is widthUp, and a parameter xUp = widthUp/widthDwn. A residual array before the up-sampling is resDwn[widthDwn], and a residual array after the up-sampling is resUp[widthUp]. The relationship between the up-sampling parameters may be represented by the following formula (1), formula (2), and formula (3).$\begin{matrix}For x ranging from 0 to widthDwn - 1 , \\ resUp \left[\left(x+1\right)\times xUp-1\right] = resDwn \left[x\right]\end{matrix}$ (1)

Let resUp[-1] = resDwn[0], where resUp[-1] is not calculated in the residual block, but is used for auxiliary calculation, similar to padding (padding).

Record xHor = m*xUp-1 for each m ranging from 0 to widthDwn-1. For each dX ranging from 1 to xUp-1. $sum = \left(xUp-dX\right) \times resUp \left[xHor\right] + dX \times resUp \left[xHor+xUp\right]$ (2) $resUp \left[xHor+dX\right] = \left(sum+xUp/2\right) / xUp$ (3)

For example, the up-sampling is based on interpolation filtering. For example, an 8-tap interpolation filter used in vvc to perform motion compensation for sub-pixel motion vectors may be multiplexed. Certainly, to reduce complexity, a smaller number of taps may be used, for example, 4-tap interpolation filtering.

In some implementations, the method in FIG. 10 may further include: parsing a bitstream to determine a quantization coefficient; and performing inverse quantization on the quantization coefficient to determine a transform coefficient. After the transform coefficient is obtained, inverse transform may be performed on the transform coefficient to determine the first residual block of the current block.

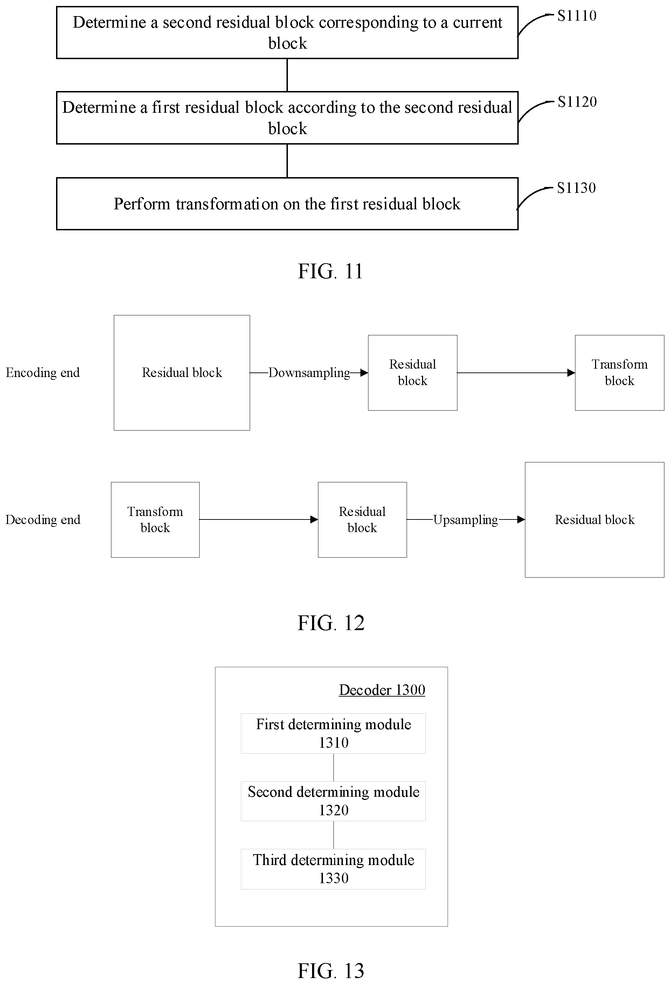

With reference to FIG. 10, the foregoing describes in detail a decoding method provided in embodiments of this application. With reference to FIG. 11, the following describes in detail an encoding method provided in an embodiment of this application.

FIG. 11 is a schematic flowchart of an encoding method according to an embodiment of this application. The method in FIG. 11 may be applied to an encoder.

Referring to FIG. 11, in step S1110, a second residual block corresponding to a current block is determined. A size of the second residual block is equal to a size of the current block.

The current block may refer to a current block to be encoded. In some implementations, the current block is a luminance block. In other implementations, the current block may also be a chrominance block.

In some implementations, before step S1110 is performed, the current block may be first predicted to determine a prediction block corresponding to the current block. Then, the second residual block is determined according to the prediction block. A manner of determining the second residual block according to the prediction block may include, for example, determining a difference between the current block and the prediction block as the second residual block.

In step S1120, the first residual block is determined according to the second residual block. A size of the first residual block is less than a size of the current block. Alternatively, a size of the second residual block is greater than a size of the first residual block. For example, the first residual block may be determined by performing down-sampling on the second residual block. There may be multiple manners for performing down-sampling on the second residual block. For example, for the second residual block, down-sampling is first performed in a horizontal direction, and then down-sampling is performed in a vertical direction. For another example, for the second residual block, down-sampling is first performed in a vertical direction, and then down-sampling is performed in a horizontal direction. Performing down-sampling in a one-dimensional direction can reduce computational complexity. Certainly, in some implementations, two-dimensional down-sampling may be performed on the second residual block, thereby improving sampling accuracy.

There may be multiple manners for performing down-sampling. For example, the second residual block may be down-sampled based on the average value. For another example, the second residual block may be down-sampled based on a random value.

A size of the first residual block is less than a size of the current block. In some implementations, the size of the first residual block may be associated with the size of the current block. Alternatively, the size of the first residual block may be determined based on the size of the current block. Assuming that the ratio of the width to the height of the first residual block is a first ratio, and that the ratio of the width to the height of the current block is a second ratio, the first ratio may be equal to the second ratio n.

As an example, if a size of a current block is 16×16, a size of a first residual block is 8×8; if the size of the current block is 32×32, the size of the first residual block is 8×8; if the size of the current block is 64×64, the size of the first residual block is 8×8; if a size of the current block is 8×32, a size of the first residual block is 4×16; if a size of the current block is 32×8, a size of the first residual block is 16×4; if a size of the current block is 8×64, a size of the first residual block is 4×32; if a size of the current block is 64×8, a size of the first residual block is 32×4; if a size of the current block is 32×64, a size of the first residual block is 8×16; or if the size of the current block is 64×32, the size of the first residual block is 16×8.

Referring to FIG. 11 again, in step S1130, the first residual block is transformed. For example, the first residual block may be transformed to determine a transform coefficient of the current block. Then, the transform coefficient may be quantized to determine the quantization coefficient, and the quantization coefficient are encoded.

In the encoding method provided in embodiments of this application, after step S1120, a residual block with a relatively small size (smaller than a size of a current block) is obtained. Therefore, the transform operation in step S1130 is performed on a smaller size block, thereby reducing computation complexity of the transform process.

Embodiments of this application set no specific limitation on a type of a transform operation performed in step S1130. In some implementations, embodiments of this application may be applied to a scenario in which a positive correlation between complexity of a transform operation and a size of a block is obvious. For example, as mentioned above, the NSPT solution is currently applied to only small-sized blocks. This is because a larger size of a block results in higher computational complexity of the NSPT. Therefore, embodiments of this application may be applied to a NSPT-based encoding and decoding scenario, thereby reducing computational complexity of a transform/inverse transform operation.

Embodiments of this application may be applied to a current block of any size. In some implementations, if the size of the current block belongs to a specific size or a specific size set, the encoding method shown in FIG. 11 is used. If a size of the current block does not belong to a specific size or a specific size set, the second residual block may be directly transformed to determine a transform coefficient of the current block. For example, if the current block is a small block, a residual block with the same size as the small block may be determined, and transformation is performed based on the residual block. If the current block is a large block, a second residual block with the same size as the large block may be determined. Then, a first residual block smaller than the size of the large block is determined based on the second residual block, and transformation is performed based on the first residual block. The following provides two possible implementations.

### Implementation 1:

If a size of the current block belongs to the first size set, the first residual block may be transformed based on NSPT to determine a transform coefficient of the current block. Then, the transform coefficient may be quantized to determine the quantization coefficient, and the quantization coefficient is encoded. The first size set mentioned herein may include, for example, at least one of the following sizes: 32×32, 64×64, 8×32, 32×8, 8×64, 64×8, 32×64, or 64×32.

If the size of the current block does not belong to the first size set, the second residual block may be directly transformed based on NSPT to determine the transform coefficient of the current block. Then, the transform coefficient may be quantized to determine the quantization coefficient, and the quantization coefficient is encoded. For example, if a size of the current block is one of the following sizes: 4×4, 4×8, 8×4, 8×8, 4×16, 16×4, 8×16, 16×8, 4×32, or 32×4, the second residual block may be directly transformed based on NSPT to determine a transform coefficient of the current block.

In the foregoing, it may be determined, based on a preset threshold, whether the current block belongs to the first size set. For example, if the size of the current block is greater than or equal to the first threshold, the size of the current block belongs to the first size set.

It can be learned from the foregoing description that, in implementation 1, regardless of whether a size of the current block belongs to a first size set, transformation is performed based on the NSPT. In this way, an advantage of high compression efficiency of the NSPT can be fully utilized, and overall coding performance is improved.

### Implementation 2:

If a size of the current block belongs to the first size set, the first residual block may be transformed based on NSPT to determine a transform coefficient of the current block. Then, the transform coefficient may be quantized to determine the quantization coefficient, and the quantization coefficient is encoded. The first size set mentioned herein may include, for example, at least one of the following sizes: 32×32, 64×64, 8×32, 32×8, 8×64, 64×8, 32×64, or 64×32.

If the size of the current block belongs to the second size set, the second residual block may be directly transformed based on NSPT to determine the transform coefficient of the current block. Then, the transform coefficient may be quantized to determine the quantization coefficient, and the quantization coefficient is encoded. The second size set mentioned herein may include a relatively small size. For example, the second size set may include at least one of the following sizes: 4×4, 4×8, 8×4, 8×8, 4×16, 16×4, 8×16, 16×8, 4×32, or 32×4.

If the size of the current block belongs to a third size set, the second residual block may be directly transformed based on the primary transform or the primary transform plus secondary transform to determine the transform coefficient of the current block. Then, the transform coefficient may be quantized to determine the quantization coefficient, and the quantization coefficient is encoded. The third size set mentioned herein may include, for example, sizes other than sizes in the first size set and the second size set. For example, the third size set may include 128×64.

In the foregoing, it may be determined, based on a preset threshold, whether the current block belongs to the first size set. For example, if the size of the current block is greater than or equal to the first threshold, the size of the current block belongs to the first size set.

Certainly, it may also be determined, based on a preset threshold, whether the current block belongs to the second size set or the third size set. For example, if the size of the current block is less than or equal to the second threshold, the size of the current block belongs to the second size set.

It can be learned from the foregoing description that the implementation 2 provides more transform manners, and transform manners can be flexibly selected according to an actual situation.

As mentioned above, the first residual block may be determined by performing down-sampling on the second residual block. The following provides specific examples for a down-sampling manner.

For example, down-sampling is performed on the second residual block based on the average value. If one-dimensional down-sampling is performed on the second residual block, assuming down-sampling of 2: 1, an average value of two adjacent points may be used as a value of one down-sampled point. Assuming down-sampling of 4: 1, an average value of four adjacent points may be used as a value of one down-sampled point.

Horizontal down-sampling is used as an example. It is assumed that a width before down-sampling is widthOrg, a width after down-sampling is widthDwn, and a parameter xDwn = widthOrg/widthDown. A residual array before down-sampling is resOrg[widthOrg], a residual array after down-sampling is resDwn[widthDwn], and a relationship between down-sampling parameters may be represented by the following formula (4):
For x ranging from 0 to widthDwn-1, $\begin{matrix}resDwn \left[x\right] = \left({\sum }_{i = 0}^{bDwn - 1} resOrg\left[x\times xDwn+i\right]+\left(1≪\left({log}_{2}\left(xDwn\right)-1\right)\right)\right) ≫ \\ {log}_{2} \left(xDwn\right)\end{matrix}$ (4)

In some implementations, the method in FIG. 11 may further include: quantizing a transform coefficient determined based on a first residual block to determine a quantization coefficient; and encoding the quantization coefficient.

The foregoing separately describes, from a decoding end and an encoding end, a decoding method and an encoding method that are provided in embodiments of this application. The following provides a specific embodiment of this application with reference to an encoding and decoding procedure.

### Encoding end flow

The encoder generates a residual block. The residual block may be obtained by subtracting the prediction value from the original value of the current block. A size of the residual block is equal to a size of the current block.

The size of the current block may be a size of a CU. If the chrominance component is currently encoded, the size of the current block may be a size of the chrominance component block. If a CU is partitioned into multiple TUs, the size of the current block may also be a size of the TU.

The residual block is transformed. There may be multiple choices for the encoder to transform the residual block. For example, only DCT2, DST7 or DCT8, and the like of the primary transformation is used. For another example, NSPT may also be used. Certainly, the transformation may be skipped, that is, no transformation is performed. The encoder may select an appropriate transform mode for transformation.

In an example in which the encoder selects the NSPT to perform transform, a residual block may be directly transformed by using the NSPT for a block size of 4×4, 4×8, 8×4, 8×8, 4×16, 16×4, 8×16, 16×8, 4×32, or 32×4. For some current blocks with a relatively large size, for example, blocks of 32×32, 64×64, 8×32, 32×8, 8×64, 64×8, 32×64, and 64×32, a residual block may be down-sampled to a block with an adapted size, and then a NSPT transform is performed on the reduced residual block.

As shown in FIG. 12, both an encoding end and a decoding end relate to transform of a block size. A size of a block on which transform is performed or transform in an embodiment of this application is performed, is referred to as an adaptation block size. Before the transform, the encoder down-samples the residual block to the adaptive block size, performs the transform with the adaptive block size, that is, the transform block (tb transform block) size is equal to the adaptive block size, and performs subsequent quantization and entropy coding.

In embodiments of this application, a correspondence between a size of a current block and an adaptation block size may be preset. For example, a specific correspondence may be shown in Table 6.

**Table 6**

| Size of the current block | Adaptation block size |
|---|---|
| 16×16 | 8×8 |
| 32×32 | 8×8 |
| 64×64 | 8×8 |
| 8×32 | 4×16 |
| 32×8 | 16×4 |
| 8×64 | 4×32 |
| 64×8 | 32×4 |
| 32×64 | 8×16 |
| 64×32 | 16×8 |

### Decoding end flow

The decoder performs entropy decoding and inverse quantization to obtain a transform coefficient.

Inverse transform is performed on the transform coefficient to obtain a residual block. The decoder may determine the transform manner according to a bitstream indication and known information.

In an example in which the encoder selects NSPT to perform inverse transform, NSPT may be directly used to perform inverse transform on a residual block for a block size of 4×4, 4×8, 8×4, 8×8, 4×16, 16×4, 8×16, 16×8, 4×32, and 32×4. For some current blocks of a relatively large size, for example, blocks 32×32, 64×64, 8×32, 32×8, 8×64, 64×8, 32×64, and 64×32 that meet a condition of adapting to NSPT, an adaption block size may be determined based on Table 6. Inverse transformation based on NSPT is performed on the transform coefficient to obtain a residual block with an adaptation block size. Then, the residual block with the adaptation block size is up-sampled to obtain the residual block of the current block.

The residual block is added to the prediction block to obtain a reconstruction block.

In the foregoing description, the larger-sized current block also uses the NSPT. However, the smaller transform core rather than the larger transform core is applied to the larger-sized current block. Specifically, at the encoding end, a residual block of a specific size is down-sampled to a residual block of a smaller size, and transformation is performed on the residual block by using NSPT. Correspondingly, at the decoding end, the coefficient is inversely transformed by using NSPT to obtain a residual block, and a residual block of a larger size is obtained by performing up-sampling on the residual block. The key point is to adapt the NSPT by using the up-sampling and down-sampling of the spatial domain. In this way, a transform core applied to a current block with a small size can also be applied to a current block with a large size. Certainly, the up-sampling and the down-sampling are lossy, and a certain high-frequency information may be lost. However, when performing lossy encoding, NSPT and quantization also lose a certain high-frequency information. Therefore, distortion generated in this step is acceptable.

It may be understood that "inverse transform" of the transform coefficient by the decoding end may also be referred to as "transform" in a standard text. In embodiments of this application, "transform" and "inverse transform" correspond to two opposite processes. For example, "transform" converts a value of a spatial domain into a coefficient of a frequency domain, and "inverse transform" converts a coefficient of a frequency domain into a value of a spatial domain. If only decoding is specified in the standard, the "transform" in the standard text is the part of decoding and refers to the "inverse transform" in this application. The "inverse transform" of the transform coefficient by the decoding end may also be referred to as "transform" in the standard text.

The foregoing describes the method embodiments of this application in detail with reference to FIG. 1 to FIG. 12. The following describes the apparatus embodiments of this application in detail with reference to FIG. 13 to FIG. 16. It should be understood that the description of the method embodiment corresponds to the description of the apparatus embodiment. Therefore, for a part that is not described in detail, reference may be made to the foregoing method embodiment.

FIG. 13 is a schematic structural diagram of a decoder according to an embodiment of this application. As shown in FIG. 13, the decoder 1300 includes a first determining unit 1310, a second determining unit 1320, and a third determining unit 1330.

The first determining unit 1310 is configured to perform inverse transform on a transform coefficient to determine a first residual block corresponding to a current block, where a size of the first residual block is less than a size of the current block.

The second determining unit 1320 is configured to determine a second residual block according to the first residual block, where a size of the second residual block is equal to the size of the current block.

The third determining unit 1330 is configured to determine, according to the second residual block, a reconstruction block corresponding to the current block.

In some implementations, the first determining unit 1310 is configured to perform inverse transform on the transform coefficient based on a first transform manner, where the first transform manner is non-separable primary transform.

In some implementations, the decoder 1300 further includes a fourth determining unit configured to determine whether a size of the current block belongs to a first size set. The first determining unit 1310 is configured to: if a size of the current block belongs to the first size set, determine the first residual block.

In some implementations, the decoder 1300 further includes a fifth determining unit configured to: if a size of the current block does not belong to the first size set, perform inverse transformation on the transform coefficient to determine a third residual block, where a size of the third residual block is equal to a size of the current block.

In some implementations, the fifth determining unit is configured to perform inverse transform on the transform coefficient based on a first transform manner, where the first transform manner is non-separable primary transform.

In some implementations, the decoder 1300 further includes an inverse transform unit configured to perform inverse transform on a transform coefficient based on a first transform manner if a size of the current block belongs to a second size set; and/or perform inverse transform on the transform coefficient based on a second transform manner if a size of the current block belongs to a third size set. The first transform manner is different from the second transform manner.

In some implementations, the first transform manner is non-separable primary transform, and the second transform manner is a combination of primary transform and secondary transform.

In some implementations, the first size set includes at least one of the following sizes: 32×32, 64×64, 8×32, 32×8, 8×64, 64×8, 32×64, or 64×32.

In some implementations, the second size set includes at least one of the following sizes: 4×4, 4×8, 8×4, 8×8, 4×16, 16×4, 8×16, 16×8, 4×32, or 32×4.

In some implementations, the size of the first residual block is determined based on the size of the current block.

In some implementations, a ratio of a width to a height of the first residual block is a first ratio, a ratio of a width to a height of the current block is a second ratio, and the first ratio is equal to the second ratio.

In some implementations, if a size of the current block is 16×16, a size of the first residual block is 8×8; or if the size of the current block is 32×32, the size of the first residual block is 8×8; or if a size of the current block is 64×64, a size of the first residual block is 8×8; or if a size of the current block is 8×32, a size of the first residual block is 4×16; or if a size of the current block is 32×8, a size of the first residual block is 16×4; or if a size of the current block is 8×64, a size of the first residual block is 4×32; or if a size of the current block is 64×8, a size of the first residual block is 32×4; or if a size of the current block is 32×64, a size of the first residual block is 8×16; or if the size of the current block is 64×32, the size of the first residual block is 16×8.

In some implementations, the second determining unit 1320 is configured to: perform up-sampling on the first residual block to determine the second residual block.

In some implementations, the second determining unit 1320 is configured to: for the first residual block, perform up-sampling first in a horizontal direction, and then perform up-sampling in a vertical direction; or for the first residual block, perform up-sampling first in a vertical direction, and then perform up-sampling in a horizontal direction; or perform two-dimensional up-sampling on the first residual block.

In some implementations, the decoder 1300 further includes: a sixth determining unit, configured to parse a bitstream to determine a quantization coefficient; and a seventh determining unit, configured to perform inverse quantization on the quantization coefficient to determine the transform coefficient.

In some implementations, the third determining unit 1330 is configured to: predict the current block to determine a prediction block corresponding to the current block; and determine the reconstruction block according to the second residual block and the prediction block.

In some implementations, the first determining unit 1310 is configured to: determine the first residual block based on non-separable primary transform, where a transform core set of the non-separable primary transform is determined based on an intra prediction mode of the prediction block.

It may be understood that in embodiments of this application, the term "unit" may be a partial circuit, a partial processor, a partial program or software, or the like. Certainly, the term "unit" may be a module or may be in a non-modular form. In addition, components in embodiments may be integrated into one processing unit, or each of the units may exist alone physically, or two or more units may be integrated into one unit. The foregoing integrated unit may be implemented in a form of hardware, or may be implemented in a form of a software functional module.

When the integrated unit is implemented in a form of a software functional module and not sold or used as an independent product, the integrated unit may be stored in a computer-readable storage medium. Based on such an understanding, the technical solutions of embodiments essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor (processor) to execute all or some of the steps of the methods described in the embodiments. The foregoing storage medium includes various media that may store a program code, such as a USB flash drive, a removable hard disk, a read-only memory (Read Only Memory, ROM), a random access memory (Random Access Memory, RAM), a magnetic disk, or an optical disc.

Therefore, an embodiment of this application provides a computer readable storage medium, applied to a decoder 1200, where the computer readable storage medium stores a computer program, and the computer program is executed by a processor to implement the decoding method in the foregoing first embodiment.

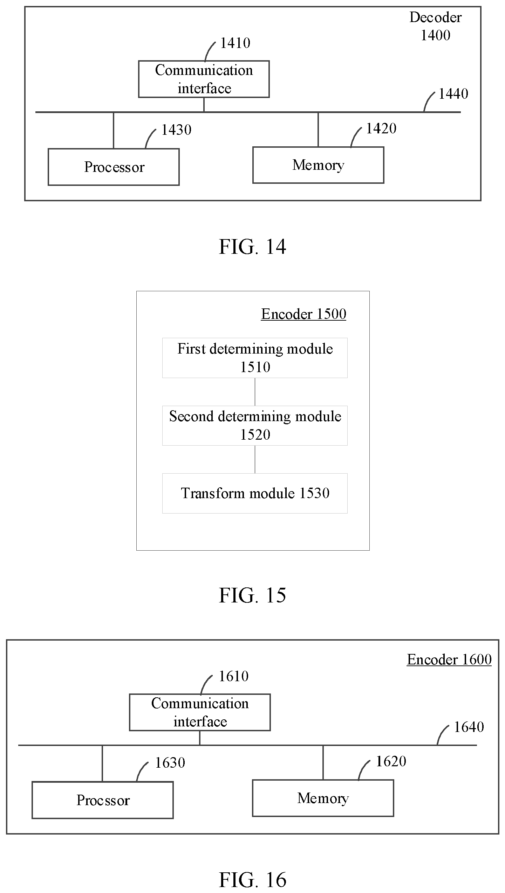

Based on the composition of the decoder 1300 and the computer readable storage medium, reference is made to FIG. 14, which shows a schematic structural diagram of hardware of the decoder 1400 according to an embodiment of this application. As shown in FIG. 14, the decoder 1400 may include a communications interface 1410, a memory 1420, and a processor 1430. Various components are coupled together by using a bus system 1440. It may be understood that the bus system 1440 is configured to implement connection and communication between these components. In addition to a data bus, the bus system 1440 further includes a power bus, a control bus, and a status signal bus. However, for clarity, various buses are marked as the bus system 1440 in FIG. 14.

The communications interface 1410 is configured to receive and transmit a signal in a process of transmitting and receiving information between the communications interface 1410 and another external network element.

The memory 1420 is configured to store a computer program.

The processor 1430 is configured to: when running the computer program, perform inverse transformation on a transform coefficient to determine a first residual block corresponding to a current block, where a size of the first residual block is less than a size of the current block; determine a second residual block according to the first residual block, where a size of the second residual block is equal to the size of the current block; and determine, according to the second residual block, a reconstruction block corresponding to the current block.

It may be understood that the memory 1420 in embodiments of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example rather than limitative description, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct Rambus random access memory (Direct Rambus RAM, DRRAM). The memory 1420 of the system and method described in this application is intended to include but is not limited to these and any other suitable type of memory.

The processor 1430 may be an integrated circuit chip, and has a signal processing capability. In an implementation process, the steps of the foregoing methods may be completed by using an integrated logic circuit of hardware in the processor 1430 or an instruction in a form of software. The processor 1430 may be a general purpose processor, a digital signal processor (Digital Signal Processor, DSP), an application-specific integrated circuit (Application Specific Integrated Circuit, ASIC), a Field Programmable Gate Array (Field Programmable Gate Array, FPGA) or another programmable logic device, a discrete gate or transistor logic device, or a discrete hardware component. The processor can implement or execute the methods, steps and logical block diagrams disclosed in embodiments of this application. The general-purpose processor may be a microprocessor, or the processor may be any conventional processor or the like. The steps of the methods disclosed with reference to embodiments of this application may be directly executed by a hardware decoding processor, or executed by a combination of hardware and software modules in the decoding processor. The software module may be located in a mature storage medium in the art, for example, a random access memory, a flash memory, a read-only memory, a programmable read-only memory, an electric erasable programmable memory, or a register. The storage medium is located in the memory 1420. The processor 1430 reads information in the memory 1420 and completes the steps of the foregoing methods by using hardware of the processor 1430.

It may be understood that these embodiments described in this application may be implemented by hardware, software, firmware, middleware, microcode, or a combination thereof. For hardware implementation, the processing unit may be implemented in one or more application-specific integrated circuits (Application Specific Integrated Circuits, ASIC), digital signal processors (Digital Signal Processing, DSP), digital signal processing devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units configured to execute the functions described in this application, or a combination thereof. For software implementation, the technologies described in this application can be implemented by modules (such as processes and functions) that execute the functions described in this application. Software code may be stored in a memory and executed by a processor. The memory can be implemented in the processor or outside the processor.

Optionally, in another embodiment, the processor 1430 is further configured to execute the decoding method in the foregoing embodiment when running the computer program.

FIG. 14 is a schematic structural diagram of an encoder according to an embodiment of this application. As shown in FIG. 15, the encoder 1500 includes a first determining unit 1510, a second determining unit 1520, and a transform unit 1530.

The first determining unit 1510 is configured to determine a second residual block corresponding to a current block, where a size of the second residual block is equal to a size of the current block.

The second determining unit 1520 is configured to determine a first residual block according to the second residual block, where a size of the first residual block is less than the size of the current block.

The transform unit 1530 is configured to perform transformation on the first residual block.

In some implementations, the transform unit 1530 is configured to perform transformation on the first residual block based on a first transform manner, where the first transform manner is non-separable primary transform.

In some implementations, the encoder 1500 further includes a third determining unit configured to determine whether a size of the current block belongs to a first size set. The second determining unit 1520 is configured to: if a size of the current block belongs to the first size set, determine the first residual block according to the second residual block.

In some implementations, the encoder 1500 further includes a first transform unit configured to transform the second residual block if the size of the current block does not belong to the first size set.

In some implementations, the first transformation unit is configured to perform transformation on the second residual block based on a first transform manner, where the first transform manner is non-separable primary transform.

In some implementations, the encoder 1500 further includes a second transform unit configured to: transform the second residual block based on a first transform manner if the size of the current block belongs to a second size set; and/or transform the second residual block based on a second transform manner if the size of the current block belongs to a third size set. The first transform manner is different from the second transform manner.

In some implementations, the first transform manner is non-separable primary transform, and the second transform manner is a combination of primary transform and secondary transform.

In some implementations, the first size set includes at least one of the following sizes: 32×32, 64×64, 8×32, 32×8, 8×64, 64×8, 32×64, or 64×32.

In some implementations, the second size set includes at least one of the following sizes: 4×4, 4×8, 8×4, 8×8, 4×16, 16×4, 8×16, 16×8, 4×32, or 32×4.

In some implementations, the size of the first residual block is determined based on the size of the current block.

In some implementations, a ratio of a width to a height of the first residual block is a first ratio, a ratio of a width to a height of the current block is a second ratio, and the first ratio is equal to the second ratio.

In some implementations, if a size of the current block is 16×16, a size of the first residual block is 8×8; or if the size of the current block is 32×32, the size of the first residual block is 8×8; or if a size of the current block is 64×64, a size of the first residual block is 8×8; or if a size of the current block is 8×32, a size of the first residual block is 4×16; or if a size of the current block is 32×8, a size of the first residual block is 16×4; or if a size of the current block is 8×64, a size of the first residual block is 4×32; or if a size of the current block is 64×8, a size of the first residual block is 32×4; or if a size of the current block is 32×64, a size of the first residual block is 8×16; or if the size of the current block is 64×32, the size of the first residual block is 16×8.

In some implementations, the second determining unit 1520 is configured to perform down-sampling on the second residual block to determine the first residual block.

In some implementations, the second determining unit 1520 is configured to: for the first residual block, perform down-sampling in a horizontal direction first, and then perform down-sampling in a vertical direction; or for the first residual block, perform down-sampling first in a vertical direction, and then perform down-sampling in a horizontal direction; or perform two-dimensional down-sampling on the first residual block.

In some implementations, the encoder 1500 further includes: a fourth determining unit configured to quantize a transform coefficient determined based on the first residual block to determine a quantization coefficient; and an encoding unit, configured to encode the quantization coefficient.

In some implementations, the first determining unit 1510 is configured to: predict the current block to determine a prediction block corresponding to the current block; and determine the second residual block according to the prediction block.

In some implementations, the transform unit 1530 is configured to transform the first residual block based on non-separable primary transform, where a transform core set of the non-separable primary transform is determined based on an intra prediction mode of the prediction block.

It may be understood that in embodiments of this application, the term "unit" may be a partial circuit, a partial processor, a partial program or software, or the like. Certainly, the term "unit" may be a module or may be in a non-modular form. In addition, components in embodiments may be integrated into one processing unit, or each of the units may exist alone physically, or two or more units may be integrated into one unit. The foregoing integrated unit may be implemented in a form of hardware, or may be implemented in a form of a software functional module.

When the integrated unit is implemented in a form of a software functional module and not sold or used as an independent product, the integrated unit may be stored in a computer-readable storage medium. Based on such an understanding, the technical solutions of embodiments essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor (processor) to execute all or some of the steps of the methods described in the embodiments. The foregoing storage medium includes various media that may store a program code, such as a USB flash drive, a removable hard disk, a read-only memory (Read Only Memory, ROM), a random access memory (Random Access Memory, RAM), a magnetic disk, or an optical disc.

Therefore, an embodiment of this application provides a computer readable storage medium, applied to an encoder 1500, where the computer readable storage medium stores a computer program, and the computer program is executed by a processor to implement the decoding method in the foregoing first embodiment.

Based on the foregoing composition of the encoder 1500 and a computer readable storage medium, reference is made to FIG. 16, which shows a schematic structural diagram of hardware of the encoder 1600 according to an embodiment of this application. As shown in FIG. 16, the encoder 1600 may include a communications interface 1610, a memory 1620, and a processor 1630. Various components are coupled together by using a bus system 1640. It may be understood that the bus system 1640 is configured to implement connection and communication between these components. In addition to a data bus, the bus system 1640 further includes a power bus, a control bus, and a status signal bus. However, for clarity, various buses are marked as the bus system 1640 in FIG. 16.

The communications interface 1610 is configured to receive and transmit a signal in a process of transmitting and receiving information between the communications interface 1610 and another external network element.

The memory 1620 is configured to store a computer program.

The processor 1630 is configured to: when running the computer program, determine a second residual block corresponding to a current block, where a size of the second residual block is equal to a size of the current block; determine a first residual block according to the second residual block, where a size of the first residual block is less than a size of the current block; and perform transformation on the first residual block.

It may be understood that the memory 1620 in the embodiments of this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example rather than limitative description, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct Rambus random access memory (Direct Rambus RAM, DRRAM). The memory 1620 in the systems and the methods described in this application includes but is not limited to these memories and any memory of another appropriate type.

The processor 1630 may be an integrated circuit chip, and has a signal processing capability. In an implementation process, the steps in the foregoing methods may be completed by using an integrated logic circuit of hardware in the processor 1630 or an instruction in a form of software. The foregoing processor 1630 may be a general purpose processor, a Digital Signal Processor (Digital Signal Processor, DSP), an Application Specific Integrated Circuit (Application Specific Integrated Circuit, ASIC), a Field Programmable Gate Array (Field Programmable Gate Array, FPGA) or another programmable logic device, a discrete gate or transistor logic device, or a discrete hardware component. The processor can implement or execute the methods, steps and logical block diagrams disclosed in embodiments of this application. The general-purpose processor may be a microprocessor, or the processor may be any conventional processor or the like. The steps of the methods disclosed with reference to embodiments of this application may be directly executed by a hardware decoding processor, or executed by a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 1620. The processor 1630 reads information in the memory 1620 and completes the steps of the foregoing methods by using hardware of the processor 1630.

It may be understood that these embodiments described in this application may be implemented by hardware, software, firmware, middleware, microcode, or a combination thereof. For hardware implementation, the processing unit may be implemented in one or more application-specific integrated circuits (Application Specific Integrated Circuits, ASIC), digital signal processors (Digital Signal Processing, DSP), digital signal processing devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units configured to execute the functions described in this application, or a combination thereof. For software implementation, the technologies described in this application can be implemented by modules (such as processes and functions) that execute the functions described in this application. Software code may be stored in a memory and executed by a processor. The memory can be implemented in the processor or outside the processor.

Optionally, in another embodiment, the processor 1630 is further configured to execute the encoding method in the foregoing embodiment when running the computer program.

It should be noted that, in this application, the terms "include", "comprise", or their any other variant are intended to cover a non-exclusive inclusion, so that a process, a method, an article, or an apparatus that includes a list of elements not only includes those elements but also includes other elements which are not expressly listed, or further includes elements inherent to such process, method, article, or apparatus. In the absence of further restrictions, the element limited by the sentence "including a ..." does not exclude the existence of other identical elements in the process, method, item or device including this element.

The foregoing sequence numbers of embodiments of this application are merely described, and do not represent advantages or disadvantages of the embodiments.

The disclosed methods provided in the several method embodiments of this application may be randomly combined with each other in the case of no conflicts, to obtain new method embodiments.

The disclosed features provided in the several product embodiments of this application may be randomly combined with each other in the case of no conflicts, to obtain new product embodiments.

The disclosed features provided in the several method or device embodiments of this application may be randomly combined with each other in the case of no conflicts, to obtain new method embodiments or device embodiments.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A decoding method, wherein the method is applied to a decoder, and the method comprises:
performing inverse transformation on a transform coefficient to determine a first residual block corresponding to a current block, wherein a size of the first residual block is less than a size of the current block;
determining a second residual block according to the first residual block, wherein a size of the second residual block is equal to the size of the current block; and
determining, according to the second residual block, a reconstruction block corresponding to the current block.

2. The method according to claim 1, wherein the performing inverse transformation on the transform coefficient comprises:
performing inverse transform on the transform coefficient based on a first transform manner, wherein the first transform manner is non-separable primary transform.

3. The method according to claim 1 or 2, further comprising:
determining whether the size of the current block belongs to a first size set;
wherein the determining a first residual block corresponding to a current block comprises:
if the size of the current block belongs to the first size set, determining the first residual block.

4. The method according to claim 3, further comprising:
if the size of the current block does not belong to the first size set, performing inverse transformation on the transform coefficient to determine a third residual block, wherein a size of the third residual block is equal to the size of the current block.

5. The method according to claim 4, wherein the performing inverse transformation on the transform coefficient to determine a third residual block comprises:
performing inverse transform on the transform coefficient based on a first transform manner to determine the third residual block, wherein the first transform manner is non-separable primary transform.

6. The method according to claim 3, further comprising:
if the size of the current block belongs to a second size set, performing inverse transformation on the transform coefficient based on a first transform manner; and/or
if the size of the current block belongs to a third size set, performing inverse transform on the transform coefficient based on a second transform manner,
wherein the first transform manner is different from the second transform manner.

7. The method according to claim 6, wherein the first transform manner is non-separable primary transform, and the second transform manner is primary transform or a combination of primary transform and secondary transformation.

8. The method according to any one of claims 3 to 7, wherein the determining whether a size of the current block belongs to a first size set comprises:
if the size of the current block is greater than or equal to a first threshold, determining that the size of the current block belongs to the first size set.

9. The method according to claim 8, wherein the first size set comprises at least one of the following sizes:
32×32, 64×64, 8×32, 32×8, 8×64, 64×8, 32×64, or 64×32.

10. The method according to claim 6 or 7, wherein a size of the current block belonging to a second size set comprises:
if the size of the current block is less than or equal to a second threshold, the size of the current block belongs to the second size set.

11. The method according to claim 10, wherein the second size set comprises at least one of the following sizes:
4×4, 4×8, 8×4, 8×8, 4×16, 16×4, 8×16, 16×8, 4×32, or 32×4.

12. The method according to any one of claims 1 to 11, wherein the size of the first residual block is determined based on the size of the current block.

13. The method according to claim 12, wherein a ratio of a width to a height of the first residual block is a first ratio, a ratio of a width to a height of the current block is a second ratio, and the first ratio is equal to the second ratio.

14. The method according to any one of claims 1 to 13, wherein
if a size of the current block is 16×16, a size of the first residual block is 8×8; or
if a size of the current block is 32×32, a size of the first residual block is 8×8; or
if a size of the current block is 64×64, a size of the first residual block is 8×8; or
if a size of the current block is 8×32, a size of the first residual block is 4×16; or
if a size of the current block is 32×8, a size of the first residual block is 16×4; or
if a size of the current block is 8×64, a size of the first residual block is 4×32; or
if a size of the current block is 64×8, a size of the first residual block is 32×4; or
if a size of the current block is 32×64, a size of the first residual block is 8×16; or
if the size of the current block is 64×32, the size of the first residual block is 16×8.

15. The method according to any one of claims 1 to 14, wherein the determining a second residual block according to the first residual block comprises:
performing up-sampling on the first residual block to determine the second residual block.

16. The method according to claim 15, wherein the performing up-sampling on the first residual block comprises:
for the first residual block, performing up-sampling first in a horizontal direction, and then performing up-sampling in a vertical direction; or
for the first residual block, performing up-sampling first in a vertical direction, and then performing up-sampling in a horizontal direction; or
performing two-dimensional up-sampling on the first residual block.

17. The method according to any one of claims 1 to 16, further comprising:
parsing a bitstream to determine a quantization coefficient; and
performing inverse quantization on the quantization coefficient to determine the transform coefficient.

18. The method according to any one of claims 1 to 17, wherein the determining, according to the second residual block, a reconstruction block corresponding to the current block comprises:
predicting the current block, to determine a prediction block corresponding to the current block; and
determining the reconstruction block according to the second residual block and the prediction block.

19. The method according to any one of claims 1 to 18, wherein the first residual block is determined based on non-separable primary transform, and a transform core set of the non-separable primary transform is determined based on an intra prediction mode of the prediction block.

20. An encoding method, wherein the method is applied to an encoder, and the method comprises:
determining a second residual block corresponding to a current block, wherein a size of the second residual block is equal to a size of the current block;
determining a first residual block according to the second residual block, wherein a size of the first residual block is less than the size of the current block; and
performing transformation on the first residual block.

21. The method according to claim 20, wherein the performing transformation on the first residual block comprises:
performing transformation on the first residual block based on a first transform manner, wherein the first transformation manner is non-separable primary transform.

22. The method according to claim 20 or 21, further comprising:
determining whether a size of the current block belongs to a first size set;
wherein the determining a first residual block according to the second residual block comprises:
if a size of the current block belongs to the first size set, determining the first residual block according to the second residual block.

23. The method according to claim 22, further comprising:
if the size of the current block does not belong to the first size set, performing transformation on the second residual block.

24. The method according to claim 23, wherein the performing transformation on the second residual block comprises:
performing transformation on the second residual block based on a first transformation manner, wherein the first transformation manner is non-separable primary transform.

25. The method according to claim 22, further comprising:
if a size of the current block belongs to a second size set, performing transformation on the second residual block based on a first transform manner; and/or
if a size of the current block belongs to a third size set, performing transformation on the second residual block based on a second transform manner,
wherein the first transform manner is different from the second transform manner.

26. The method according to claim 25, wherein the first transformation manner is non-separable primary transform, and the second transformation manner is primary transform or a combination of primary transform and secondary transformation.

27. The method according to any one of claims 22 to 26, wherein the determining whether a size of the current block belongs to a first size set comprises:
if the size of the current block is greater than or equal to a first threshold, determining that the size of the current block belongs to the first size set.

28. The method according to claim 27, wherein the first size set comprises at least one of the following sizes:
32×32, 64×64, 8×32, 32×8, 8×64, 64×8, 32×64, or 64×32.

29. The method according to claim 25 or 26, wherein a size of the current block belonging to a second size set comprises:
if the size of the current block is less than or equal to a second threshold, the size of the current block belongs to the second size set.

30. The method according to claim 29, wherein the second size set comprises at least one of the following sizes:
4×4, 4×8, 8×4, 8×8, 4×16, 16×4, 8×16, 16×8, 4×32, or 32×4.

31. The method according to any one of claims 20 to 30, wherein the size of the first residual block is determined based on the size of the current block.

32. The method according to claim 31, wherein a ratio of a width to a height of the first residual block is a first ratio, a ratio of a width to a height of the current block is a second ratio, and the first ratio is equal to the second ratio.

33. The method according to any one of claims 20 to 32, wherein
if a size of the current block is 16×16, a size of the first residual block is 8×8; or
if a size of the current block is 32×32, a size of the first residual block is 8×8; or
if a size of the current block is 64×64, a size of the first residual block is 8×8; or
if a size of the current block is 8×32, a size of the first residual block is 4×16; or
if a size of the current block is 32×8, a size of the first residual block is 16×4; or
if a size of the current block is 8×64, a size of the first residual block is 4×32; or
if a size of the current block is 64×8, a size of the first residual block is 32×4; or
if a size of the current block is 32×64, a size of the first residual block is 8×16; or
if the size of the current block is 64×32, the size of the first residual block is 16×8.

34. The method according to any one of claims 20 to 33, wherein the determining a first residual block according to the second residual block comprises:
performing down-sampling on the second residual block to determine the first residual block.

35. The method according to claim 34, wherein the performing down-sampling on the second residual block comprises:
for the first residual block, performing down-sampling first in a horizontal direction, and then performing down-sampling in a vertical direction; or
for the first residual block, performing down-sampling first in a vertical direction, and then performing down-sampling in a horizontal direction; or
performing two-dimensional down-sampling on the first residual block.

36. The method according to any one of claims 20 to 35, further comprising:
quantizing a transform coefficient determined based on the first residual block to determine a quantization coefficient; and
encoding the quantization coefficient.

37. The method according to any one of claims 20 to 36, wherein the determining a second residual block corresponding to a current block comprises:
predicting the current block, to determine a prediction block corresponding to the current block; and
determining the second residual block according to the prediction block.

38. The method according to any one of claims 20 to 37, wherein the performing transformation on the first residual block comprises:
performing transformation on the first residual block based on non-separable primary transform, wherein a transform core set of the non-separable primary transform is determined based on an intra prediction mode of the prediction block.

39. A decoder, comprising:
a first determining module, configured to perform inverse transformation on a transform coefficient to determine a first residual block corresponding to a current block, wherein a size of the first residual block is less than a size of the current block;
a second determining module, configured to determine a second residual block according to the first residual block, wherein a size of the second residual block is equal to a size of the current block; and
a third determining module, configured to determine, according to the second residual block, a reconstruction block corresponding to the current block.

40. A decoder, comprising:
a memory, configured to store a computer program; and
a processor, configured to execute the method according to any one of claims 1 to 19 when running the computer program.

41. An encoder, comprising:
a first determining module, configured to determine a second residual block corresponding to a current block, wherein a size of the second residual block is equal to a size of the current block;
a second determining module, configured to determine a first residual block according to the second residual block, wherein a size of the first residual block is less than a size of the current block; and
a transform module, configured to perform transformation on the first residual block.

42. An encoder, comprising:
a memory, configured to store a computer program; and
a processor, configured to execute the method according to any one of claims 20 to 38 when running the computer program.

43. A non-volatile computer readable storage medium for storing a bitstream, wherein the bitstream is generated by using an encoding method of an encoder, or the bitstream is decoded by using a decoding method of a decoder, the decoding method is the method according to any one of claims 1 to 19, and the encoding method is the method according to any one of claims 20 to 38.

44. A bitstream, wherein the bitstream comprises a bitstream generated by the method according to any one of claims 1 to 19 or a bitstream generated by the method according to any one of 20 to 38.
